# EUROPEAN PATENT APPLICATION

(11) **EP 4 503 257 A1**
(43) Date of publication of application: **05.02.2025**
(21) Application number: 23778989.6
(22) Date of filing: 16.02.2023
(51) Int. Cl.: H01M 10/48, H02J 7/00

(54) **BATTERY PACK**

(30) Priority: 29.03.2022 JP 2022054242
(71) Applicant: Panasonic Energy Co., Ltd., Osaka 570-8511 (JP)
(72) Inventor: TSUTSUI, Akio, Kadoma-shi, Osaka 571-0057 (JP); NONAKA, Takafumi, Kadoma-shi, Osaka 571-0057 (JP); IIDA, Ayato, Kadoma-shi, Osaka 571-0057 (JP)
(74) Representative: Novagraaf International SA
(86) International application number: PCT/JP2023/005587
(87) International publication number: WO 2023/188959

(57) **Abstract**

A battery pack includes: a battery module; an operational amplifier that is supplied with a power source voltage from the battery module and includes an input terminal connected to a voltage line having a potential with respect to a ground line; an input switching element connected between the voltage line having a potential with respect to the ground line and the input terminal of the operational amplifier; and a switching circuit that switches the input switching element on and off. The switching circuit switches the input switching element to an on state in an operating state of the operational amplifier and switches the input switching element to an off state in a non-operating state of the operational amplifier, and interrupts an input current to the input terminal in the non-operating state of the operational amplifier.

## Description

### TECHNICAL FIELD

The present disclosure relates to a battery pack incorporating an operational amplifier.

### BACKGROUND ART

A battery pack incorporates an operational amplifier for amplifying a monitoring signal in order to monitor a state of a battery module. For example, the battery pack is provided with a circuit that detects a current of the battery module without exception, and detects a remaining capacity, a degree of deterioration, and the like of the battery module (See PTL 1).

The battery pack incorporates a battery management unit (BMU) for protecting the battery module. For example, the BMU detects a charge current or a discharge current of the battery module to calculate the remaining capacity, or prevents overcharge, overdischarge, or the like. In the BMU, electric information of the battery module is input from an operational amplifier, and an input signal is calculated to control charging and discharging of the battery module. For example, information such as a current of the battery module is input to the BMU from the operational amplifier. This operational amplifier amplifies a voltage drop of a current detection resistor connected in series with the battery module and outputs the voltage drop to the BMU. Since the electric resistance of the current detection resistor is set to be considerably small in order to reduce power consumption due to the current and a temperature rise due to Joule heat, a voltage drop with respect to the current to be detected is extremely small. Therefore, the voltage drop of the current detection resistor is amplified by the operational amplifier to a signal level that can be processed by the BMU and input to the BMU.

Since a detection element such as the current detection resistor is connected between the battery module and a ground line, an input terminal of the operational amplifier connected thereto is connected to a voltage line having a potential difference with respect to the ground line. An input current flows through the input terminal of the operational amplifier connected to the voltage line by an input resistor. The input current of the operational amplifier increases in proportion to a voltage of the voltage line connecting the input terminal. Therefore, the input terminal of the operational amplifier connected to both ends of the current detection resistor connected to a positive side of the battery module is connected to the voltage line having a high voltage comparable to an output voltage of the battery module, and the input current becomes considerably large. Since the input current of the operational amplifier discharges the battery module to reduce the remaining capacity even in a non-operating state in which the battery pack is not used, the input current of the operational amplifier is required to be as small as possible in order to prevent unnecessary discharge of the battery module. The input current can be reduced by increasing an input impedance of the operational amplifier, but the operational amplifier having a high input impedance increases the component cost. Furthermore, no matter how high the input impedance of the operational amplifier is, the operational amplifier cannot make the input current zero.

### Citations List

### Patent Literature

PTL 1: Unexamined Japanese Patent Publication No. 2018-173360

### SUMMARY OF THE INVENTION

The present disclosure has been developed to solve the above disadvantages, and an object of the present disclosure is to provide a battery pack capable of reducing wasteful power consumption of a battery module due to an input current of an operational amplifier and reducing a decrease in a remaining capacity of the battery module even in long-term storage.

A battery pack according to an aspect of the present disclosure includes: a battery module; an operational amplifier that is supplied with a power source voltage from the battery module and includes an input terminal connected to a voltage line having a potential with respect to a ground line; an input switching element connected between the voltage line having a potential with respect to the ground line and the input terminal of the operational amplifier; and a switching circuit that switches the input switching element on and off. The switching circuit switches the input switching element to an on state in an operating state of the operational amplifier and switches the input switching element to an off state in a non-operating state of the operational amplifier, and interrupts an input current to the input terminal in the non-operating state of the operational amplifier.

In the battery pack described above, wasteful power consumption of the battery module due to the input current of the operational amplifier can be reduced, and a decrease in a remaining capacity of the battery module can be reduced even in long-term storage.

### BRIEF DESCRIPTION OF THE DRAWINGS

Fig. 1 is a block diagram of a battery pack according to an exemplary embodiment of the present disclosure.
Fig. 2 is a block diagram of a battery pack according to another exemplary embodiment of the present disclosure.

### DESCRIPTION OF EMBODIMENT

A battery pack according to an exemplary embodiment of the present disclosure includes: a battery module; an operational amplifier that is supplied with a power source voltage from the battery module and includes an input terminal connected to a voltage line having a potential with respect to a ground line; an input switching element connected between the voltage line having a potential with respect to the ground line and the input terminal of the operational amplifier; and a switching circuit that switches the input switching element on and off, in which the switching circuit switches the input switching element to an on state in an operating state of the operational amplifier and switches the input switching element to an off state in a non-operating state of the operational amplifier, and interrupts an input current to the input terminal in the non-operating state of the operational amplifier.

In the battery pack described above, in the non-operating state of the operational amplifier, the input switching element connecting the input terminal of the operational amplifier and the voltage line is switched to the off state, and the input current flowing from the voltage line to the input terminal is interrupted. Therefore, the adverse effect that the input current of the operational amplifier wastefully discharges the battery module in the non-operating state of the operational amplifier can be eliminated. Moreover, in the above battery pack, since the input current of the operational amplifier is interrupted by the input switching element, the input current can be interrupted without affecting an input resistance of the operational amplifier. This achieves a feature that the input current can be reliably interrupted in the non-operating state while using an operational amplifier having a small input impedance, in other words, a large input current. Therefore, while using an operational amplifier having a low input impedance, wasteful power consumption of the battery module can be significantly reduced in the non-operating state of the operational amplifier.

A battery pack according to another exemplary embodiment of the present disclosure further includes a current detection resistor connected in series with the battery module to detect a current of the battery module, in which the voltage line connected to the current detection resistor can be connected to the input terminal of the operational amplifier via the input switching element.

In the battery pack described above, the operational amplifier that amplifies a voltage drop of the current detection resistor that detects the current of the battery module interrupts the input current in the non-operating state, and wasteful power consumption of the battery module can be reduced.

In the battery pack according to another exemplary embodiment of the present disclosure, the current detection resistor can be connected to a positive side of the battery module.

In the battery module described above, although the input terminal of the operational amplifier is connected to the high-voltage voltage line, the input current in the non-operating state is interrupted, and wasteful power consumption of the battery module in the non-operating state can be reduced. Since the input current of the operational amplifier increases in proportion to a voltage of the voltage line connecting the input terminal, in the operational amplifier connecting the input terminal to the positive side of the battery module, the input current increases and the battery module power consumption considerably increases. However, the above battery pack has a feature that, since the input current can be interrupted without affecting the voltage of the voltage line, even in this use state, the power consumption of the battery module in the non-operation state can be significantly reduced by interrupting the input current of the operational amplifier.

In a battery pack according to another exemplary embodiment of the present disclosure, the operational amplifier includes a non-inverting input terminal and an inverting input terminal, the input switching element is connected to both the non-inverting input terminal and the inverting input terminal, and the switching circuit switches both the input switching elements connected to the non-inverting input terminal and the inverting input terminal to an off state in a non-operating state.

In the battery pack described above, while using the operational amplifier including the non-inverting input terminal and the inverting input terminal, the input current of both input terminals can be interrupted by the input switching element, and wasteful power consumption of the battery module can be reduced.

In the battery pack according to another exemplary embodiment of the present disclosure, the non-inverting input terminal and the inverting input terminal of the operational amplifier can be connected to both ends of the current detection resistor.

A battery pack according to another exemplary embodiment of the present disclosure further includes: a battery management unit (BMU) that outputs, to the switching circuit, a control signal for controlling the input switching element to be turned on and off; and a power source switching element that is connected to a power source terminal of the operational amplifier and supplies a power source voltage from the battery module to the operational amplifier in an operating state, in which the switching circuit can switch both the input switching element and the power source switching element to an on state in an operating state and can switch both the input switching element and the power source switching element to an off state in a non-operating state by the control signal output from the BMU.

The battery pack described above has a feature that, in the non-operating state of the operational amplifier, both the input current and the power source current of the operational amplifier are interrupted, and wasteful discharge by the operational amplifier of the battery module in the non-operating state can be eliminated.

A battery pack according to another exemplary embodiment of the present disclosure further includes a temperature sensor that detects a temperature of the battery module, in which the input terminal of the operational amplifier can be, via the input switching element, connected to the voltage line to which the temperature sensor is connected.

In the battery pack described above, even in the operational amplifier that measures a voltage of the temperature sensor connected to the voltage line, the input current of the operational amplifier can be interrupted in a non-operating state, and wasteful power consumption of the battery module can be reduced.

In the battery pack according to another exemplary embodiment of the present disclosure, the input switching element may include an FET.

In the battery pack described above, since the input switching element includes an FET, there is a feature that the input switching element can be quickly switched on and off by the control signal input from the switching circuit to the switching element.

Hereinafter, the present disclosure will be described in detail with reference to the drawings. In the following description, terms that indicate specific directions and positions (for example, "upper", "lower" and other terms including those terms) are used when necessary. However, these terms are used to facilitate understanding of the disclosure with reference to the drawings and hence, the technical scope of the present disclosure is not limited by the meanings of these terms. Furthermore, parts denoted by the same reference marks in a plurality of drawings indicate the same or equivalent parts or members.

Moreover, exemplary embodiments described below illustrate specific examples of the technical idea of the present disclosure, and the present disclosure is not limited to the exemplary embodiments below. Furthermore, unless otherwise specified, dimensions, materials, shapes, relative arrangements, and the like of the configuration components described below are not intended to limit the scope of the present disclosure only to them, but are intended to be illustrative. Furthermore, the contents described in one exemplary embodiment or example are also applicable to other exemplary embodiments and examples. Furthermore, sizes, positional relationships, and the like of the members in each drawing are sometimes exaggerated for facilitating the understanding of the description.

### (First exemplary embodiment)

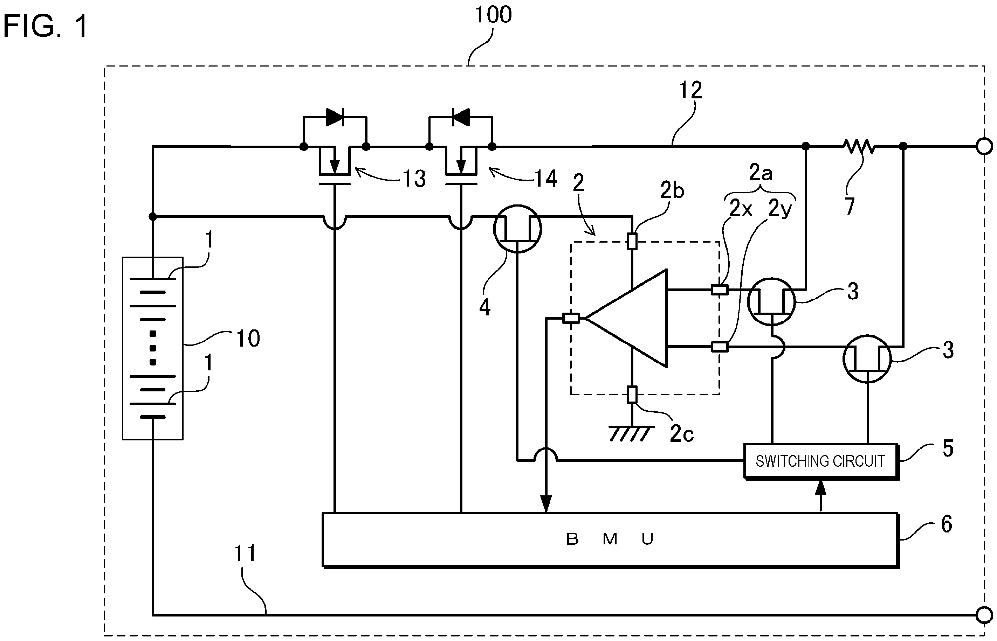

Battery pack 100 illustrated in the block diagram of Fig. 1 includes battery module 10, operational amplifier 2 that is supplied with a power source voltage from battery module 10, input switching element 3 connected in series with input terminal 2a of operational amplifier 2, and switching circuit 5 that controls input switching element 3 to be turned on and off. Moreover, battery pack 100 in the figure also includes power source switching element 4 that switches operational amplifier 2 between an operating state and a non-operating state, and BMU 6 that controls switching circuit 5.

### (Battery module 10)

In battery module 10, a plurality of battery cells 1 are connected in series or in parallel so as to be able to output voltage and current optimum for a load. In battery module 10, an output voltage can be adjusted by the number of battery cells 1 connected in series, and an output current and a total charge and discharge capacity can be adjusted by the number of battery cells connected in parallel. As each of battery cells 1 of battery module 10, a lithium ion secondary battery capable of increasing the charge and discharge capacity with respect to weight and volume is suitable, but the present disclosure does not specify the battery cell as a lithium ion secondary battery, and all other secondary batteries such as all-individual batteries can be used.

### (Operational amplifier 2)

Operational amplifier 2 includes input terminal 2a connected to voltage line 12 having a potential difference with respect to ground line 11. In operational amplifier 2 of Fig. 1, input terminal 2a is connected to current detection resistor 7. Since current detection resistor 7 is connected to battery module 10 via voltage line 12, there is a potential difference with respect to ground line 11. An input current flows through input terminal 2a of operational amplifier 2 connected to voltage line 12 having a potential difference with respect to ground line 11 in proportion to a voltage of input terminal 2a. Since the input current flows even in the non-operating state of operational amplifier 2, the input current causes battery module 10 to be wastefully discharged and a remaining capacity to be lowered even in an unused state such as a storage period of battery pack 100. When the remaining capacity of battery module 10 is reduced and the battery module enters an overdischarge state, power cannot be supplied to a load as battery pack 100, and there is an adverse effect that deterioration is further severe.

Since the input current of operational amplifier 2 increases in proportion to a voltage of voltage line 12 connecting input terminal 2a and in inverse proportion to an input impedance, the input impedance of operational amplifier 2 can be increased to reduce the input current. However, an operational amplifier having a high input impedance is higher than an operational amplifier having a low input impedance. This is because an input side needs to have a circuit configuration of an FET input or a complicated circuit configuration. Although an operational amplifier having a low input impedance can be produced in large quantities at low cost, there is an adverse effect that the input current increases and battery module 10 is wastefully discharged.

Operational amplifier 2 of battery pack 100 of Fig. 1 includes a pair of input terminals 2a including non-inverting input terminal 2x and inverting input terminal 2y, power source terminal 2b that supplies an operating voltage to operational amplifier 2, and ground terminal 2c. Operational amplifier 2 amplifies a voltage difference input to non-inverting input terminal 2x and inverting input terminal 2y in a state where a power source voltage is supplied to power source terminal 2b, and outputs the amplified voltage difference to BMU 6. An amplification factor of operational amplifier 2 is set such that a signal level supplied from operational amplifier 2 to BMU 6 is a voltage that can be processed by BMU 6.

### (Input switching element 3)

Input switching element 3 is a semiconductor switching element such as an FET, is connected between input terminal 2a and voltage line 12, and is switched to an on or off state by an on or off signal input from switching circuit 5. Since operational amplifier 2 of Fig. 1 includes the pair of input terminals 2a including non-inverting input terminal 2x and inverting input terminal 2y, each of input terminals 2a is connected to voltage line 12 via input switching element 3. Each input switching element 3 connected to the pair of input terminals 2a is turned on in a state where the on signal is input from switching circuit 5, and inputs the voltage of current detection resistor 7 to input terminals 2a of operational amplifier 2. In a state where the off state is input from switching circuit 5, input switching element 3 is turned off, and both input terminals 2a are disconnected from voltage line 12 to interrupt the input current.

### (Power source switching element 4)

Power source switching element 4 is a semiconductor switching element such as an FET, is connected between power source terminal 2b of operational amplifier 2 and voltage line 12, and is switched to an on or off state by an on or off signal input from switching circuit 5. Power source switching element 4 is switched to an on state by an on signal input from BMU 6, and inputs a power source voltage to power source terminal 2b of operational amplifier 2 to operate operational amplifier 2. Power source switching element 4 is switched to an off state by an off signal input from BMU6, and power source terminal 2b is disconnected from voltage line 12 to bring operational amplifier 2 into a state of not consuming power.

### (Switching circuit 5)

Switching circuit 5 switches both input switching element 3 and power source switching element 4 on and off by a control signal input from the BMU 6. When the on signal is input from BMU 6, switching circuit 5 switches both input switching element 3 and power source switching element 4 to the on state, operates operational amplifier 2, amplifies a voltage difference between non-inverting input terminal 2x and inverting input terminal 2y, that is, a voltage drop of current detection resistor 7, and outputs the amplified voltage difference to BMU 6. When the off signal is input from BMU6, switching circuit 5 switches both input switching element 3 and power source switching element 4 to the off state, interrupts a power source voltage supplied to operational amplifier 2, and disconnects the input terminal 2a from voltage line 12 to interrupt the input current.

### (BMU6)

BMU 6 detects a current, a voltage, a remaining capacity, a temperature, and the like of battery module 10, and charges and discharges battery module 10 while protecting the battery module. Battery pack 100 of Fig. 1 includes charge switching element 13 and discharge switching element 14 that are switched on and off by BMU6 and control charging and discharging of battery module 10. Moreover, BMU 6 outputs an on signal to switching circuit 5 in order to set operational amplifier 2 for current detection to an operating state at a timing of detecting a current or the like, and outputs an off state to switching circuit 5 at a timing at which operational amplifier 2 does not need to be set to the operating state. For example, BMU 6 outputs the off state to switching circuit 5 in a sleep state or a shutdown state of battery pack 100, and switches both input switching element 3 and power source switching element 4 to the off state.

In battery pack 100 described above, input terminal 2a of operational amplifier 2 is connected to current detection resistor 7, and the voltage drop of current detection resistor 7 is amplified and output to BMU 6. However, in battery pack 100 of the present disclosure, voltage line 12 to which operational amplifier 2 is connected is not specified as current detection resistor 7, and for example, input terminal 2a of operational amplifier 2 is connected to a temperature sensor or the like connected to voltage line 12, and an input signal from the temperature sensor can be amplified and output to BMU 6.

### (Second exemplary embodiment)

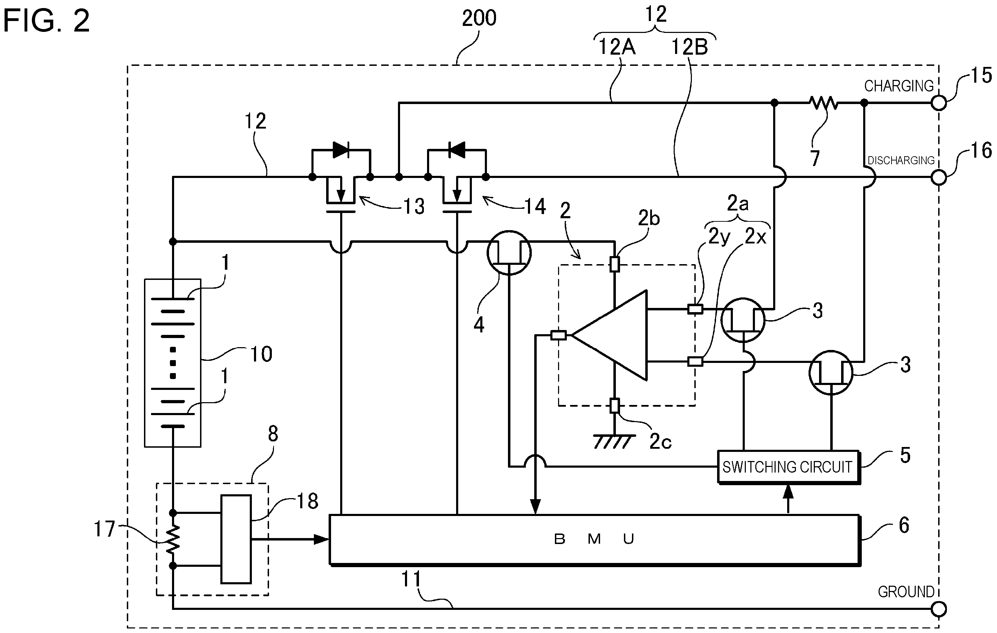

The battery pack of the present disclosure may have a structure illustrated in Fig. 2. Note that, in the battery pack illustrated in Fig. 2, the same configuration elements as those of battery pack 100 described above are denoted by the same reference marks, and the detailed description thereof is omitted. Battery pack 200 illustrated in Fig. 2 is provided with charging terminal 15 and discharging terminal 16, and voltage line 12 connected to a positive side of battery module 10 is branched into first voltage line 12A and second voltage line 12B, charging terminal 15 is connected to first voltage line 12A, and discharging terminal 16 is connected to second voltage line 12B. In battery pack 200 of Fig. 2, a series circuit of charge switching element 13 and discharge switching element 14 is connected between discharging terminal 16 and battery module 10, and charge switching element 13 is connected between charging terminal 15 and battery module 10.

Moreover, in battery pack 200 of Fig. 2, current detection resistor 7 is connected to first voltage line 12A, and input terminal 2a of operational amplifier 2 is connected to first voltage line 12A. Since current detection resistor 7 is connected to battery module 10 via first voltage line 12A, there is a potential difference with respect to ground line 11. In particular, charge switching element 13 is connected between current detection resistor 7 and battery module 10, and a parasitic diode is connected to charge switching element 13 in a direction in which a discharge current flows from battery module 10.

For this reason, even in a state where battery pack 200 is not used, there is an adverse effect that the remaining capacity of battery module 10 decreases when battery module 10 is discharged through operational amplifier 2 in the non-operating state.

In order to prevent this adverse effect, battery pack 200 also connects input switching element 3 between input terminal 2a of operational amplifier 2 and voltage line 12. Operational amplifier 2 of Fig. 2 also includes a pair of input terminals 2a including non-inverting input terminal 2x and inverting input terminal 2y, and each input terminal 2a is connected to both ends of current detection resistor 7 via input switching element 3. Each input switching element 3 connected to the pair of input terminals 2a is turned on in a state where the on signal is input from switching circuit 5, and inputs the voltage of current detection resistor 7 to input terminals 2a of operational amplifier 2. In a state where the off state is input from switching circuit 5, input switching element 3 is turned off, and both input terminals 2a are disconnected from voltage line 12 to interrupt the input current.

In battery pack 200 described above, since current detection resistor 7 is connected in series with first voltage line 12A connected to charging terminal 15, a charge current supplied from charging terminal 15 is detected by detecting a voltage across current detection resistor 7 via operational amplifier 2. Charge switching element 13 is switched to an on state at a timing when a charger is connected to charging terminal 15 and a charge current is supplied. In this state, battery module 10 is charged with the charge current supplied from the charger, and the charge current flowing through first voltage line 12A is detected by operational amplifier 2.

Second voltage line 12B is connected to discharging terminal 16, and supplies a discharge current from battery module 10 to a load in a state where the load is connected to discharging terminal 16. Here, second voltage line 12B and discharging terminal 16 can be dedicated lines and terminals for discharge, but may be used as lines and terminals for charge and discharge. For example, in a battery pack used as a power source for an electric bicycle, the battery is discharged to assist traveling of the electric bicycle, and when the traveling electric bicycle decelerates, the electric bicycle is charged by regenerative braking. As described above, in a use state in which a traveling motor as a load is connected to discharging terminal 16, battery module 10 is used in a state of repeating discharge and charge with second voltage line 12B as a charge and discharge line. In a use state in which a load is connected to discharging terminal 16, charge switching element 13 and discharge switching element 14 are controlled to be turned on and off by BMU6 according to a timing of discharging from battery module 10 or a timing of charging battery module 10.

Moreover, in battery pack 200 illustrated in the drawing, current detection unit 8 is provided on ground line 11 in order to detect the charge and discharge currents of battery module 10 in a use state to which the load is connected.

Current detection unit 8 illustrated in the drawing includes current detection resistor 17 connected in series with ground line 11 on a negative side of battery module 10, and detector 18 that detects a current value from a voltage across current detection resistor 17. Current detection unit 8 detects a charge current value and a discharge current value while determining the charge current and the discharge current from the positive and negative of the detected current values. The charge and discharge current values detected by current detection unit 8 are input to BMU6 and used for calculation of the remaining capacity of battery module 10 and the like.

### INDUSTRIAL APPLICABILITY

The battery pack of the present disclosure can be suitably used for various battery packs including an operational amplifier that operates with an input current from a battery module.

### REFERENCE MARKS IN THE DRAWINGS

100, 200: battery pack
1: battery cell
2: operational amplifier
2a: input terminal
2x: non-inverting input terminal
2y: inverting input terminal
2b: power source terminal
2c: ground terminal
3: input switching element
4: power source switching element
5: switching circuit
6: BMU
7: current detection resistor
8: current detection unit
10: battery module
11: ground line
12: voltage line
12A: first voltage line
12B: second voltage line
13: charge switching element
14: discharge switching element
15: charging terminal
16: discharging terminal
17: current detection resistor
18: detector

## Claims

1. A battery pack comprising:
a battery module;
an operational amplifier that is supplied with a power source voltage from the battery module and includes an input terminal connected to a voltage line having a potential with respect to a ground line;
an input switching element connected between the input terminal of the operational amplifier and the voltage line having a potential with respect to the ground line; and
a switching circuit that switches the input switching element on and off,
wherein the switching circuit switches the input switching element to an on state in an operating state of the operational amplifier and switches the input switching element to an off state in a non-operating state of the operational amplifier, and interrupts an input current to the input terminal in the non-operating state of the operational amplifier.

2. The battery pack according to Claim 1, further comprising a current detection resistor connected in series with the battery module to detect a current of the battery module,
wherein the voltage line connected to the current detection resistor is connected to the input terminal of the operational amplifier via the input switching element.

3. The battery pack according to Claim 2, wherein the current detection resistor is connected to a positive side of the battery module.

4. The battery pack according to any one of Claims 1 to 3, wherein
the operational amplifier includes a non-inverting input terminal and an inverting input terminal,
the input switching element is connected to both the non-inverting input terminal and the inverting input terminal, and
the switching circuit switches both the input switching elements connected to the non-inverting input terminal and the inverting input terminal to an off state in a non-operating state.

5. The battery pack according to Claim 2 or 3, wherein
the operational amplifier includes a non-inverting input terminal and an inverting input terminal,
the input switching element is connected to both the non-inverting input terminal and the inverting input terminal,
the non-inverting input terminal and the inverting input terminal of the operational amplifier are connected to both ends of the current detection resistor, and
the switching circuit switches both the input switching elements connected to the non-inverting input terminal and the inverting input terminal to an off state in a non-operating state.

6. The battery pack according to any one of Claims 1 to 5, further comprising:
a battery management unit (BMU) that outputs, to the switching circuit, a control signal for controlling the input switching element to be turned on and off; and
a power source switching element that is connected to a power source terminal of the operational amplifier and supplies a power source voltage from the battery module to the operational amplifier in an operating state,
wherein the switching circuit switches both the input switching element and the power source switching element to an on state in an operating state and switches both the input switching element and the power source switching element to an off state in a non-operating state by the control signal output from the BMU.

7. The battery pack according to any one of Claims 1 to 6, further comprising a temperature sensor that detects a temperature of the battery module,
wherein the input terminal of the operational amplifier is, via the input switching element, connected to the voltage line to which the temperature sensor is connected.

8. The battery pack according to any one of Claims 1 to 7, wherein the input switching element includes an FET.
